Europäisches Patentamt

European Patent Office

Office européen des brevets

(11) Veröffentlichungsnummer: **0 313 775 B1**

(12) **EUROPÄISCHE PATENTSCHRIFT**

(45) Veröffentlichungstag der Patentschrift: **15.01.92**

(51) Int. Cl.⁵: **G01B 11/03**, B25J 19/00

(21) Anmeldenummer: **88114534.6**

(22) Anmeldetag: **06.09.88**

(54) **Berührungsloses Messsystem für Genauigkeitskenngrössen, insbesondere von Industrierobotern.**

(30) Priorität: **08.10.87 DE 3734086**

(43) Veröffentlichungstag der Anmeldung:
**03.05.89 Patentblatt 89/18**

(45) Bekanntmachung des Hinweises auf die
Patenterteilung:
**15.01.92 Patentblatt 92/03**

(84) Benannte Vertragsstaaten:
**AT BE CH DE FR GB IT LI LU NL SE**

(56) Entgegenhaltungen:
**EP-A- 0 136 413      EP-A- 0 145 836**
**WO-A-86/00557       FR-A- 2 551 860**
**US-A- 4 427 880     US-A- 4 621 926**

(73) Patentinhaber: **SIEMENS AKTIENGESELL-
SCHAFT
Wittelsbacherplatz 2
W-8000 München 2(DE)**

(72) Erfinder: **Niedermayr, Erich, Dipl.-Ing.
Linzer Bundesstrasse 45
A-5023 Salzburg(AT)**
Erfinder: **Griessbach, Robert, Cand.-Ing.
Parkstrasse 11
W-8011 Siegertsbrunn(DE)**

EP 0 313 775 B1

Rank Xerox (UK) Business Services

**Beschreibung**

Die Erfindung betrifft ein berührungsloses Meßsystem zur Erfassung der relativen Lage eines beweglichen Meßkopfes mit Sensoren bezüglich eines feststehenden Meßobjektes (5) mit einer ebenen Meßfläche, die die x-y-Ebene eines ersten, orthogonalen dreidimensionalen Koordinatensystems definiert, wobei dem Meßkopf ein zweites Koordinatensystem zugeordnet ist, insbesondere zur Erfassung der Absolut- und Wiederholgenauigkeit von Industrierobotern. Die Erfassung der Lage von zwei Koordinatensystemen tritt nicht nur im Umgang mit Industrierobotern (IR) auf, sondern ganz allgemein bei automatischen Bearbeitungsvorgängen, zum Beispiel mit Werkzeugmaschinen gegenüber den zu bearbeitenden Werkstücken.

IR bieten eine Wiederhol- oder Reproduziergenauigkeit, die je nach Größe und Arbeitsraum des IR bei wenigen 1/10 mm bis zu 2 - 3/100 mm liegt. Die Wiederholgenauigkeit ist die Fähigkeit des IR, einen Werkzeug-Bezugspunkt im Arbeitsraum mit vorgegebener Position und Orientierung mit der bezeichneten Genauigkeit wiederholt anzufahren, wobei identische Randbedingungen vorherrschen, zum Beispiel gleicher Verfahrweg, gleiche Traglast, Geschwindigkeit, Verfahrart etc.

Für den Ansatz der Wiederholgenauigkeit zur Positionierung eines Werkzeuges/Werkstückes mittels IR ist darüber hinaus auch die Verwendung des eingesetzten IR für die Programmierung der Positionen und Bewegungen wesentlich (TEACH-IN Programmierung).

Werden die Positionen rein numerisch von Sensoren (zum Beispiel Bildauswertungssysteme) oder von CAD gestützten OFF-LINE Programmiersystemen erzeugt, bzw. auch nur von anderen, ähnlich aufgebauten Robotersystemen Programme übernommen, so ist die Absolutgenauigkeit des IR entscheidend. Die Absolutgenauigkeit eines IR ist also die Fähigkeit, einen numerisch definierten Raumpunkt (Position x, y, z plus Orientierung) bezüglich eines festgelegten Koordinatensystems mit angegebener Genauigkeit anzufahren. Die entsprechende Abhängigkeit dieser Kenngröße von verschiedenen Parametern, wie zum Beispiel Lage im Arbeitsraum, Verfahrweg, Traglast etc., muß für eine qualifizierte Untersuchung von IR-Genauigkeitskenngrößen ermittelt und statistisch ausgewertet werden (Robotics & Computer-Integrated Manufacturing, Vol. 2, No. 3/4, pp. 261 bis 278, 1985 und pp. 247 bis 259).

Die Messung der Wiederholgenauigkeit von IR wurde bisher meist durch Meßtaster oder hochgenaue Näherungssensoren, die in drei aufeinander senkrecht stehenden Ebenen angeordnet sind, und einen entsprechenden Meßwürfel, der am Robotergreifer befestigt wurde, gelöst (Europäisches Patent 0 136 413). Da der Roboter mit dem Meßwürfel stets nur aus einer Richtung in die Meßecke einfahren kann, ist eine Erweiterung, zum Beispiel Anfahren der Meßposition aus verschiedenen Richtungen, schwierig.

Aus der US-Patentschrift 4,651,283 ist eine Anordnung zur Bestimmung der räumlichen Koordinaten eines Punktes bekannt, wobei ein in der x-y-Ebene beweglicher Meßkopf mit Sensoren eingesetzt wird und in zwei Schritten die Höhe des zu vermessenden Punktes und die Lage in der x-y-Ebene der aktuellen Messung ermittelt werden.

Zur Messung der Absolutgenauigkeit sind verschiedene Meßverfahren bekannt, die jedoch entweder extrem aufwendig und teuer, bzw. zu ungenau oder zeitintensiv sind (The Industrial Robot, March 1986, pp. 53 und 54).

Der Erfindung liegt die Aufgabe zugrunde, das eingangs beschriebene Meßsystem zu konzipieren. Als Ausführungsbeispiel wird die Erfassung der Relativposition eines IR gegenüber einem Meßpunkt zugrundegelegt.

Diese Aufgabe wird durch ein Meßsystem gemäß Anspruch 1 bzw. durch einen Industrieroboter gemäß Anspruch 9 gelöst. Vorteilhafte Ausführungsformen und Weiterbildungen der Erfindung sind in den abhäugigen Ansprüchen enthalten.

Die nachstehend beschriebene Erfindung löst das Problem mittels eines berührungslosen, hochgenauen Meßsystems zur Erfassung der Relativposition zwischen einem am Robotergreifer befestigten Meßkopf und einem auf einer Meßplatte aufgebrachten Strichmuster. Durch Aneinanderreihung dieser Muster in regelmäßigen Abständen läßt sich die auf diese Meßebene bezogene Absolutgenauigkeit (Palettiergenauigkeit, Rastergenauigkeit) unter veränderlichen Randbedingungen (wie eingangs beschrieben) ermitteln. Weiter ist vorteilhaft, daß das verwendete Meßobjekt (Meßplatte, Meßwürfel) einfach (passiv) aufgebaut werden kann, daß die Anordnung und Veränderung im Arbeitsraum des IR einfach und eine Vermessung der interessierenden Arbeitsbereiche möglich ist. Insbesondere können dabei mechanische Strukturen (orthogonale Meßflächen, Meßwürfel etc.) eingesetzt werden, auf die im photographischen Verfahren hergestellten Strichscheiben (zum Beispiel beschichtete Alu-Folien) aufgebracht werden.

Für andere Anwendungen als die Robotervermessung kann eine invertierte Anordnung - bewegtes Meßobjekt, feststehender Meßkopf - durchaus vorteilhaft sein.

Obwohl die Relativposition zwischen ausgewählten Meßebenen oder Meßobjekten durch entsprechende mechanische Distanzstücke exakt vorgegeben werden kann, muß doch eine einmalige Zuordnung zwischen Meßebene/Meßebenen-o-Punkt und dem Ursprung des IR-Koordinatensystems durchgeführt werden. Diese einmalige Zuordnung (Referieren) erfolgt vorzugsweise durch TEACH-IN, da diese Zuordnung bzw. das Referieren in ähnlicher Form auch bei der Sensor-Roboter-Kopplung oder der IR-OFF-LINE Programmierung durchgeführt werden muß. Das also beim IR-Einsatz ohnehin durchgeführte Referieren wird bei dem erfindungsgemäßen Verfahren genutzt, um die Komplexität der Meßaufgabe (Vermessung der Raumpunkte zum Beispiel ± 0.01 mm im Arbeitsraum 2 x 2 x 2 m$^3$) unter Berücksichtigung der geforderten Meßergebnisse, zu reduzieren.

Die Erfindung wird anhand der Figuren erläutert. Es zeigen:

Figur 1 eine schematische Darstellung des an einem IR montierten Meßsystems,

Figur 2 ein Blockschaltbild der Meßwerterfassung,

Figur 3 eine Prinzipskizze der Anordnung von Drehtisch und Abstandssensor,

Figur 4 das Ausgangssignal des Abstandssensors,

Figur 5 eine Prinzipskizze der Anordnung des Strichdetektors,

Figur 6 das Erkennungsbild des Strichdetektors bei der Betrachtung einer Geraden 6 und

Figur 7 schematisch die Koordinatensysteme und die Lage der aus den Meßwerten berechneten Größen.

Mit 1 ist eine Roboterhand bezeichnet, an der ein Präzisionsdrehtisch 2 befestigt ist. An diesem Drehtisch mit Inkrementengeber als Wegmeßsystem sind zwei Sensoren, und zwar ein Abstandssensor 3, der zum Beispiel nach dem Triangulationsprinzip arbeitet, und ein optischer Sensor 4 befestigt. Unter diesen Sensoren befindet sich in der Meßebene eine Platte 5 mit Strichmuster. Die Striche 6 sind Gerade, die sich in der Mitte schneiden. Der Schnittpunkt ist durch einen Kreis 7 abgedeckt. Am rechten Rand der Platte befindet sich in der Figur ein Nullsegment 8, das durch Weglassen einer Halbgeraden entstanden ist.

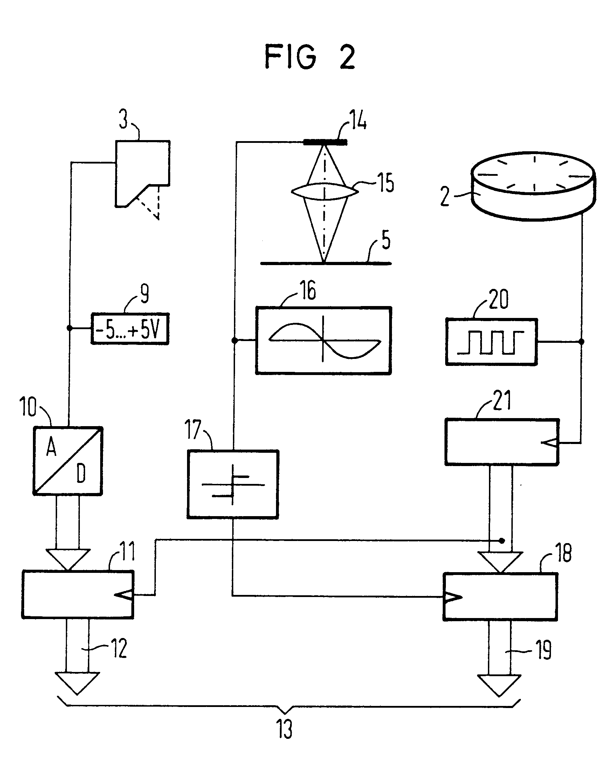

In der Figur 2 ist der Abstandssensor 3 mit einem Analogausgang 9 dargestellt. Die Ausgangssignale dieses Abstandssensors führen zu einem A/D-Wandler 10, bevor sie einem Speicherregister 11 zugeführt werden. Der Ausgang 12 dieses Registers gelangt zur Auswertung in eine elektronische Datenverarbeitung 13. Der optische Sensor besteht aus einer Differentialphotodiode 14 und einer Optik 15. Darunter befindet sich die Platte 5 mit dem Strichmuster. Das Ausgangssignal 16 der Differentialphotodiode führt über einen Nulldurchgangsdetektor 17 zu dem Triggereingang eines Registers 18, dessen Ausgang 19 ebenfalls direkt mit der Datenverarbeitung 13 verbunden ist. Das Ausgangssignal 20 des Drehtellers mit Inkrementengeber 2 führt zu einem Zähler 21, der mit dem Triggereingang des Registers 11 und dem Register 18 verbunden ist.

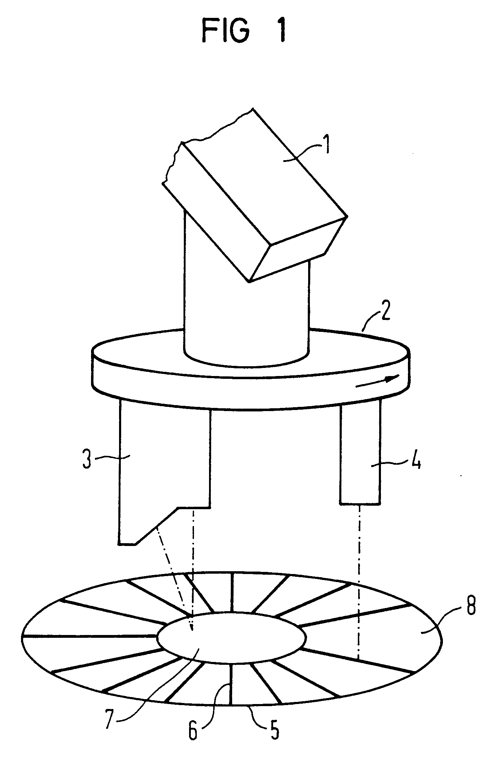

Für besonders hochwertige Arbeitsvorgänge ist es erforderlich, festzustellen, mit welcher Genauigkeit der IR arbeitet. Hierzu dient der in der Figur 1 dargestellte Meßaufbau nach der Erfindung. Er wird vom Roboter angefahren und ein Meßvorgang gestartet. Während einer Umdrehung des Drehtisches werden die Sensorsignale des Abstandssensors im Register 11 aufgezeichnet. Die Signale des optischen Sensors triggern das Register 18 und speichern die Zählerstände des Inkrementengebers. Der Abstand von der Meßebene und die Verkippung um die x- und y-Achse kann aus den Abstandssensorsignalen rechnerisch bestimmt werden. Die Verdrehung um die z-Achse und die Verschiebung in x- und y-Richtung wird durch Abtasten des Strichmusters ermittelt und rechnerisch ausgewertet. Um die geforderte Genauigkeit einhalten zu können, müssen die Strichpositionen 6 mit einer bestimmten maximalen Unsicherheit, unabhängig vom Abstand der Optik zur Strichscheibe und unabhängig von der Beleuchtung, detektiert werden können. Eine Optik 15 mit Blende und Differentialdiode 14 als Aufnehmer erfüllt diese Anforderungen. Um Fehler durch Unschärfe klein zu halten, muß der Durchmesser der Blende so klein wie möglich gemacht werden. Die Signale der Differentialphotodiode 14 werden einem Differenzverstärker zugeführt und der Nulldurchgang 17 des verstärkten Signals ausgewertet. Als Abstandssensor 3 dient im bestehenden Aufbau ein nach dem Triangulationsprinzip arbeitendes, marktverfügbares Laser-Meßsystem.

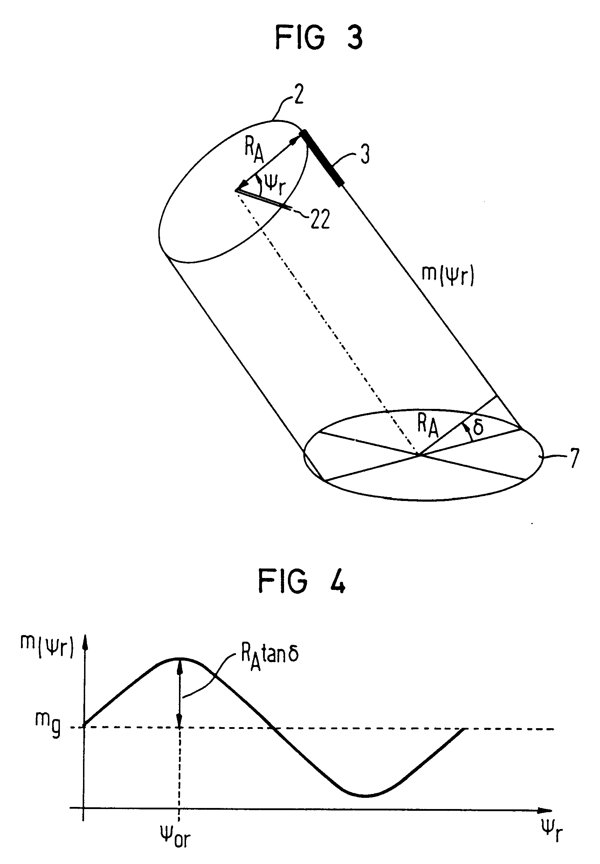

Die Auswertung der Signale des Abstandssensors und des optischen Sensors wird in Zusammenhang mit den Figuren 3 bis 7 beschrieben.

Während eines vollständigen Umlaufs des Präzisionsdrehtisches werden die Ausgangssignale des Abstandssensors 3 abgetastet und gespeichert. Jedesmal wenn die optische Achse des optischen Sensors die Symmetrielinie eines Striches 6 schneidet, werden die Winkelwerte des Inkrementengebers ebenfalls gespeichert.

Durch Aufaddieren der Inkremente ist die momentane Position des Präzisionsdrehtisches, bezogen auf einen Nullpunkt, bekannt. Das analoge Ausgangssignal des Abstandssensors wird digitalisiert und der Wert in regelmäßigen Abständen, wie bereits ausgeführt, abgespeichert. Das dazu nötige Triggersignal kann direkt vom Inkrementenzähler 21 abgenommen werden. Aus dem Mittelwert der Abstandssensorwerte läßt sich die Verschiebung in z-Richtung berechnen. Aus zwei jeweils um 180° versetzten Werten kann die Verkippung um die x- und y-Achse bestimmt werden. Mittels statistischer Methoden (Regressionsanaylse) läßt sich aus einer Reihe von Meßwerten jedoch ein genaueres Meßergebnis erzielen.

Die ermittelten Werte vom Abstandssensor, die in Form einer Sinuskurve erscheinen, gehorchen folgender Gleichung:

$$m(\psi_r) = m_g + R_A \tan\delta \cos(\psi_r - \psi_{or})$$

In dieser Formel bedeutet

$\psi_r$: Laufvariable, Position des Drehtisches (Wegmeßsystem)

$m_g$: Gleichanteil

$\psi_{or}$: Richtung der Verkippung (Hauptachsenrichtung der Ellipse)

$\delta$: Betrag der Verkippung.

Die Bestimmung von $m_g$, $\delta$, $\psi_{or}$ erfolgt durch Minimierung der Fehlerquadrate nach Gauß.

Aus den Figuren 3 und 4 sind die genannten Werte ablesbar. Mit 22 ist der Nullpunkt des Inkrementengebers bezeichnet und mit $R_A$ der Abstand des Abstandssensors von der Drehachse.

Die Achse des optischen Sensors schneidet die Strichscheibe 5 in Form einer Ellipse. Die Orientierung und Größe der Hauptachsen der Ellipse kann nach Auswertung der Abstandssensorsignale ermittelt werden. Der Nulldurchgang der Ausgangssignale der Differentialdiode liefert das Triggersignal für das Register 18, das den momentanen Stand des Drehtisches übernimmt. Der Registerinhalt entspricht also dem Winkel, bei dem die optische Achse des Sensors die Symmetrielinie einer Geraden 6 auf der Strichscheibe schneidet.

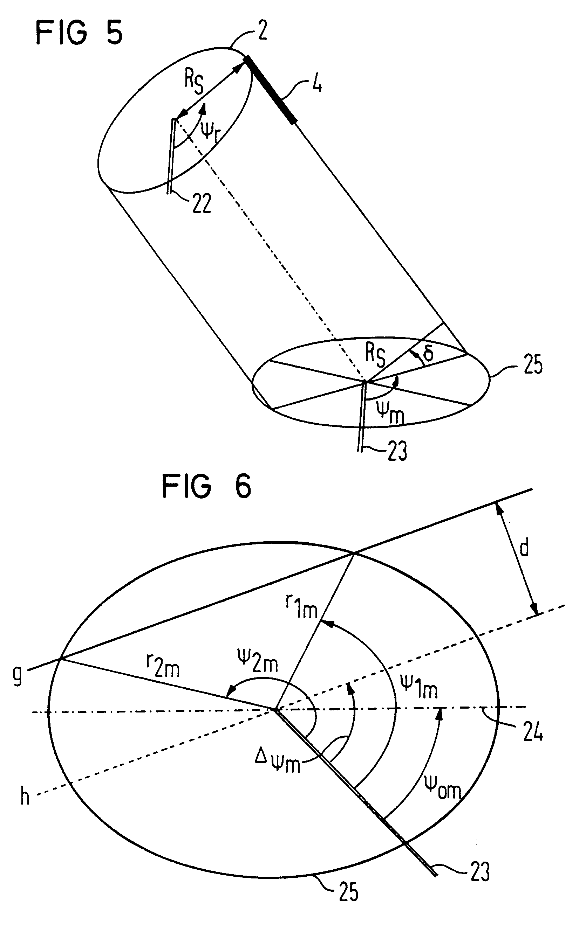

Zu Erläuterung der Auswertung der Werte des optischen Sensors dienen die Figuren 5 und 6. Mit dem Bezugszeichen 23 ist der projizierte Nullpunkt von 22 im Drehtisch 2 bezeichnet. Rs ist der Abstand des optischen Detektors auf der Drehachse. 24 kennzeichnet die Hauptachse der Ellipse bei $\psi_{or}$ (Figur 4). Mit dem Bezugszeichen h (Figur 6) ist eine Hilfsgerade markiert, auf der der Mittelpunkt der Ellipse 25 liegt. Diese Gerade befindet sich im Abstand d von der Geraden g die eine der Geraden 6 ist. Die Winkel mit dem Index r liegen in der Drehtischebene und die entsprechenden Winkel mit dem Index m in der Meßebene. Die Winkel $\psi_{1m}$ und $\psi_{2m}$ sind die zu der Geraden g gehörenden Strichdetektorwerte. Diese Werte werden in der Drehtischebene gemessen und in die Meßebene transformiert.

Aus der Auswertung der gemessenen Abstandssensorwerte und der Geometrie des Meßaufbaus sind die Größe und Orientierung der Ellipse 25 berechenbar.

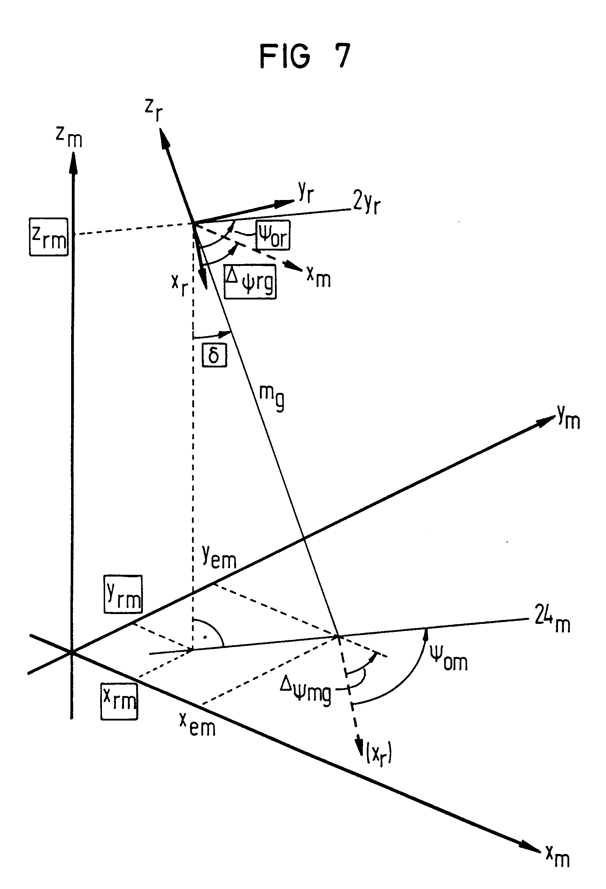

$\Delta\psi_m$ ist der Winkel zwischen dem projizierten Nullpunkt und der Geraden h. $r_{1m}$ und $r_{2m}$ sind die aus $\psi_{1m}$ und $\psi_{2m}$ berechenbaren Radien. Aus den Radien $r_{1m}$ und $r_{2m}$ läßt sich der Abstand d der Geraden h von der Geraden g berechnen. Der ideale Schnittpunkt aller Geraden h ist der Ellipsenmittelpunkt ($x_{em}$, $y_{em}$, Figur 7) im Meßkoordinatensystem. Dieser Mittelpunkt wird durch Minimierung der Fehlerquadrate nach Gauß bestimmt.

Der ganze Vorgang wird für sämtliche Geraden 6 durchgeführt.

Die Figur 7 zeigt schematisch die Koordinatensysteme ($x_r$, $y_r$, $z_r$) und ($x_m$, $y_m$, $z_m$) und die Lage der aus den Meßwerten berechneten Größen. Die gesuchten Werte sind in dieser Figur umrandet, das heißt sie stehen in einem Kästchen.

$x_{rm}$, $y_{rm}$, $z_{rm}$ bezeichnen die Position des Koordinatensystems Index r im Koordinatensystem Index m.

$z_{rm}$ berechnet man aus $m_g$ und $\delta$. Diese Werte können aus der Figur 4 entnommen werden.

$x_{rm}$ und $y_{rm}$ folgen aus $x_{em}$, $y_{em}$, $m_g$ und $\delta$.

$\Delta\psi_{mg} + \Delta\psi_{rg}$ stammen aus $\Delta\psi_m$ Figur 6 und aus der Lage des Nullsegmentes (der Strichscheibe). Aus der Gesamtheit aller Winkelwerte, der Lage des Nullsegments, der Größe und Orientierung der Ellipse und der Geometrie der Meßanordnung läßt sich die Verschiebung in x- und y-Richtung sowie die Verdrehung um die z-Achse - wie ausgeführt - bestimmen. Das Ergebnis dieser Prüfung gibt die Genauigkeit des Roboters an.

**Patentansprüche**

1. Berührungsloses Meßsystem zur Erfassung der relativen Lage eines beweglichen Meßkopfes mit Sensoren bezüglich eines feststehenden Meßobjektes (5) mit einer ebenen Meßfläche, die die x-y-Ebene eines ersten, orthogonalen dreidimensionalen Koordinatensystems definiert, wobei dem Meßkopf ein zweites Koordinatensystem zugeordnet ist,
   **dadurch gekennzeichnet,**
   daß die Meßfläche mit einem Strichmuster versehen ist, und der Meßkopf einen Präzisionsdrehtisch (2) mit Wegmeßsystem aufweist, wobei an dem Präzisionsdrehtisch (2) mit Abstand von der Drehachse ein Abstands- (3) und ein optischer (4) Sensor zur Abtastung des Meßobjektes (5) angebracht sind, daß elektronische Mittel und eine Datenverarbeitungsanlage (13) zur Erfassung der Ausgangssignale des Abstands- (3) und des optischen (4) Sensors und zur Bestimmung des Abstandes des Präzisionsdrehtisches von der Meßfläche auf der Drehachse und der Verkippung des Präzisionsdrehtisches um die x- und y-Achse des ersten Koordinatensystems aus den Ausgangssignalen (9) des Abstandssensors (3) und zur Bestimmung der relativen Verdrehung der Koordinatensysteme um die z-Achse des ersten Koordinatensystems und der relativen Verschiebung in x- und y- Richtung des ersten Koordinatensystems aus den Signalen des optischen Sensors (4) vorgesehen sind.

2. Meßsystem nach Anspruch 1,
**dadurch gekennzeichnet,**
daß die Strichscheibe (5) eine Anzahl von Geraden (6) umfaßt, die mit einer durch eine Halbgerade gebildeten Ausnahme durch den Mittelpunkt der Strichscheibe (5) gehen, während die Halbgerade zur Bildung eines Nullsegmentes (8) im Mittelpunkt endet.

3. Meßsystem nach Anspruch 1,
**dadurch gekennzeichnet,**
daß der optische Sensor (4) aus einer Optik (15) mit Blende und Differentialphotodiode (14) besteht.

4. Meßsystem nach Anspruch 3,
**dadurch gekennzeichnet,**
daß die elektronischen Mittel einen mit der Differentialphotodiode (14) für die Zuführung von deren Signalen gekoppelten Differenzverstärker zur Verstärkung und Auswertung dieser Signale umfassen.

5. Meßsystem nach Anspruch 1,
**dadurch gekennzeichnet,**
daß als Abstandssensor (3) ein nach dem Triangulationsprinzip arbeitendes Laser- Meßsystem eingesetzt ist.

6. Meßsystem nach Anspruch 5,
**dadurch gekennzeichnet,**
daß die elektronischen Mittel einen Analog-Digital-Wandler (10) zur Digitalisierung des analogen Ausgangssignals (9) des Abstandssensors (3) in regelmäßigen Abständen und ein Speicher-Register (11) zur Speicherung der digitalisierten Werte umfassen.

7. Meßsystem nach Anspruch 1,
**dadurch gekennzeichnet,**
daß die Datenverarbeitungsanlage bei der Messung zur Berechnung der Verkippung des Präzisionsdrehtisches um die x- und y-Achse des ersten Koordinatensystems aus dem sinusförmigen Signalverlauf der Ausgangssignale (9) des Abstandssensors (3) und zur Berechnung des Abstandes der Mitte des Präzisionsdrehtisches (2) von der Meßfläche in z-Richtung des ersten Koordinatensystems aus dem Mittelwert der Ausgangssignale (9) des Abstandssensors (3) geeignet ist.

8. Meßsystem nach Anspruch 3,
**dadurch gekennzeichnet,**

daß der Differentialphotodiode (14) ein Nulldurchgangsdetektor (17) zur Erzeugung eines Triggersignals beim Nulldurchgang des Ausgangssignals (16) der Differentialphotodiode (14) nachgeschaltet ist, und daß ein mit dem Triggersignal beaufschlagtes Register (18) zur Übernahme des die momentane Winkelstellung des Präzisionsdrehtisches (2) repräsentierenden Zählerstandes des Inkrementengebers vorgesehen ist.

9. Industrieroboter mit einem Meßsystem nach einem der vorhergehenden Ansprüche,
**dadurch gekennzeichnet,**
daß zur Erfassung der Relativposition an einer Hand des Roboters (1) der Präzisionsdrehtisch (2) mit Inkrementengeber als Wegmeßsystem, der Abstands- (3) und der optische (4) Sensor befestigt sind, und daß das Meßobjekt (5) eine mechanische Struktur, beispielsweise eine Meßplatte oder ein Meßwürfel, ist, in dessen Meßfläche eine Strichscheibe so angeordnet ist, daß das Strichmuster dem Präzisionsdrehtisch (2) gegenüberliegt.

**Claims**

1. Contactless measuring system for detecting the relative position of a movable measuring head with sensors with respect to a fixed measured object (5) with a plane measuring surface which defines the x-y plane of a first, orthogonal three-dimensional coordinate system, a second coordinate system being assigned to the measuring head, characterised in that the measuring surface is provided with a hairline pattern and the measuring head has a precision turntable (2) with position sensor, a distance sensor (3) and an optical sensor (4) for scanning the measured object (5) being attached to the precision turntable (2) at a distance from the axis of rotation, in that electronic means and a data processing system (13) for detecting the output signals of the distance sensor (3) and the optical sensor (4) and for determining the distance of the precision turntable from the measuring surface on the axis of rotation and the tilting of the precision turntable about the x axis and y axis of the first coordinate system from the output signals (9) of the distance sensor (3) and for determining the relative rotation of the coordinate systems about the z axis of the first coordinate system and the relative displacement in the x direction and y direction of the first coordinate system from the signals of the optical sensor (4) are provided.

**2.** Measuring system according to Claim 1, characterised in that the hairline plate (5) comprises a number of straight lines (6) which with one exception formed by a half-line extend through the centre point of the hairline plate (5) whilst the half-line ends in the centre point in order to form a zero segment (8).

**3.** Measuring system according to Claim 1, characterised in that the optical sensor (4) consists of an optical system (15) with diaphragm and differential photodiode.

**4.** Measuring system according to Claim 3, characterised in that the electronic means comprise a differential amplifier coupled to the differential photodiode (14) for supplying its signals, for the purpose of amplifying and evaluating these signals.

**5.** Measuring system according to Claim 1, characterised in that a laser measuring system operating according to the triangulation principle is used as distance sensor (3).

**6.** Measuring system according to Claim 5, characterised in that the electronic means comprise an analog-to-digital converter (10) for digitising the analog output signal (9) of the distance sensor (3) at regular intervals and a storage register (11) for storing the digitised values.

**7.** Measuring system according to Claim 1, characterised in that the data processing system is suitable in the measurement for calculating the tilting of the precision turntable about the x axis and y axis of the first coordinate system from the sinusoidal signal curve of the output signals (9) of the distance sensor (3) and for calculating the distance to the centre of the precision turntable (2) from the measuring surface in the z direction of the first coordinate system from the average value of the output signals (9) of the distance sensor (3).

**8.** Measuring system according to Claim 3, characterised in that the differential photodiode (14) has connected downstream of it a zero crossover point detector (17) for generating a trigger signal at the zero crossover point of the output signal (16) of the differential photodiode (14), and in that a register (18) fed with the trigger signal is provided for transferring the counter state of the increment generator which represents the momentary angular position of the precision turntable (2).

**9.** Industrial robot having a measuring system according to any one of the preceding claims, characterised in that in order to detect the relative position, the precision turntable (2) with increment generator as position sensor, the distance sensor (3) and the optical sensor (4) are attached to a hand of the robot (1), and in that the measured object (5) is a mechanical structure, for example a measuring plate or a measuring cube, in whose measuring surface a hairline plate is arranged in such a way that the hairline pattern lies opposite the precision turntable (2).

**Revendications**

**1.** Système de mesure sans contact pour détecter la position relative d'une tête de mesure mobile comportant des capteurs par rapport à un objet de mesure fixe (5) possédant une surface de mesure plane, qui définit le plan x-y d'un premier système de coordonnées orthogonales tridimensionnelles, un second système de coordonnées étant associé à la tête de mesure,
caractérisé par le fait
que la surface de mesure comporte un réseau de traits et que la tête de mesure possède un plateau rotatif de précision (2) comportant un système de mesure de distance, un capteur de distance (3) et un capteur optique (4) servant à explorer l'objet de mesure (5) étant disposés à distance de l'axe de rotation sur le plateau rotatif de précision (2), et qu'il est prévu des moyens électroniques et une installation de traitement de données (13) pour détecter les signaux de sortie du capteur de distance (3) et du capteur optique (4) et pour déterminer la distance, comptée sur l'axe de rotation, entre le plateau rotatif de précision et la surface de mesure et le basculement du plateau rotatif de précision autour de l'axe x et de l'axe y du premier système de coordonnées à partir des signaux de sortie (9) du capteur de distance (3) et pour déterminer la rotation relative des systèmes de coordonnées autour de l'axe z du premier système de coordonnées et le déplacement relatif dans la direction x et dans la direction y du premier système de coordonnées à partir des signaux du capteur optique (4).

**2.** Système de mesure suivant la revendication 1, caractérisé par le fait que le disque à traits (5) comporte un certain nombre de droites (6) qui, à l'exception d'une demi-droite, passent par le centre du disque à traits (5), tandis que la demi-droite se termine au centre, pour former un segment nul (8).

3. Système de mesure suivant la revendication 1, caractérisé par le fait que le capteur optique (4) est constitué par un système optique (15) possédant un diaphragme et une photodiode différentielle (14).

4. Système de mesure suivant la revendication 3, caractérisé par le fait que les moyens électroniques comprennent un amplificateur différentiel qui est accouplé à la photodiode différentielle (14) pour l'envoi des signaux de cette diode et qui sert à amplifier et évaluer ces signaux.

5. Système de mesure suivant la revendication 1, caractérisé par le fait qu'un système de mesure laser opérant selon le principe de la triangulation est utilisé en tant que capteur de distance (3).

6. Système de mesure suivant la revendication 5, caractérisé par le fait que les moyens électroniques comprennent un convertisseur analogique/numérique (10) servant à numériser le signal de sortie analogique (9) du capteur de distance (3) à des distances régulières et un registre de mémoire (11) servant à mémoriser les valeurs numérisées.

7. Système de mesure suivant la revendication 1, caractérisé par le fait que l'installation de traitement de données convient, lors de la mesure, pour le calcul du basculement du plateau rotatif de précision autour de l'axe x et de l'axe y du premier système de coordonnées à partir de la variation sinusoïdale des signaux de sortie (9) du capteur de distance (3) et pour calculer la distance entre le centre du plateau rotatif de précision (2) et la surface de mesure dans la direction z du premier système de coordonnées à partir de la valeur moyenne des signaux de sortie (9) et du capteur de distance (3).

8. Système de mesure suivant la revendication 3, caractérisé par le fait qu'en aval de la photodiode différentielle (14) est branché un détecteur d'annulations (17) servant à produire un signal de déclenchement lors de l'annulation du signal de sortie (16) de la photodiode différentielle (14) et qu'un registre (18) chargé par le signal de déclenchement est prévu pour le transfert de l'état de comptage du générateur d'incréments, qui représente la position angulaire instantanée du plateau rotatif de précision (2).

9. Robot industriel comportant un système de mesure suivant l'une des revendications précédentes, caractérisé par le fait que pour la détection de la position relative, le plateau rotatif de précision (2) équipé du capteur d'incréments en tant que système de mesure de distance, le capteur de distance (3) et le capteur optique (4) sont fixés sur une main du robot (1), et que l'objet de mesure (5) est une structure mécanique, par exemple une plaque de mesure ou un prisme de mesure, dans la surface de mesure de laquelle ou duquel un disque à traits est disposé de telle sorte que le réseau de traits est situé en vis-à-vis du plateau rotatif de précision (2).

# FIG 1

# FIG 2

## FIG 3

## FIG 4

FIG 5

FIG 6

# FIG 7